# EUROPEAN PATENT SPECIFICATION

(11) **EP 2 800 389 B1**
(45) Date of publication and mention of the grant of the patent: **21.01.2026**
(21) Application number: 12862098.6
(22) Date of filing: 17.09.2012
(51) Int. Cl.: H04N 21/422, G06F 3/14, H04N 21/41, H04N 21/4363

(54) **UI SYSTEM AND METHOD FOR INTERACTION BETWEEN HANDHELD DEVICE AND TV SET**
BENUTZERSCHNITTSTELLENSYSTEM UND VERFAHREN ZUR INTERAKTION ZWISCHEN EINER TRAGBAREN VORRICHTUNG UND EINEM FERNSEHER
SYSTÈME ET PROCÉDÉ INTERACTIFS POUR UN ÉQUIPEMENT PORTABLE ET UN POSTE DE TV SUR UNE UI

(30) Priority: 28.12.2011 CN 201110447137
(43) Date of publication of application: 05.11.2014
(73) Proprietor: Huizhou TCL Mobile Communication Co., Ltd., Huizhou, Guangdong 516006 (CN)
(72) Inventor: LIU, Jiang, Huizhou Guangdong 516006 (CN); YU, Jingjiang, Huizhou Guangdong 516006 (CN)
(74) Representative: Murgitroyd & Company
(86) International application number: PCT/CN2012/081504
(87) International publication number: WO 2013/097492

(56) References cited:
- EP-A1- 2 574 044
- WO-A1-2011/145700
- CN-A- 101 489 076
- CN-A- 101 489 076
- CN-A- 102 572 567
- JP-A- 2008 109 341
- JP-A- 2008 109 341
- JP-A- 2011 217 236
- JP-A- 2011 217 236
- US-A1- 2006 026 521
- US-A1- 2007 229 465
- US-A1- 2010 060 549
- US-A1- 2010 064 228
- US-A1- 2011 163 966
- US-A1- 2011 289 113

## Description

The present invention relates to a TV set system and a communication method thereof, and in particular, relates to a UI interaction system and method for a handheld device and a TV set.

Currently following the television developing trend of "high definition", "networking" and "intelligence", the smart televisions appear. A real smart television, however, should have the capability of obtaining TV programs through multiple channels such as network, an AV device and/or PC so as to display a program expected most by a customer on a large screen clearly by easy operation through simple and integrated user interface. The future smart television will be an entertainment center through which a user can conduct a lot of activities such as searching TV channels, recording TV programs, playing cable television programs, conducting network video, watching movies, and/or playing games.

In a time of smart phones and smart televisions, people have more choices and ways for entertainments, and many people hope that they can perform operations such as playing games or choosing and watching favorite moves directly on the television by a handheld device. UI interaction design, that is, user interface interaction is a design popular in recent years used for the interaction between people and televisions or computers, which can fully reflect the orientation and characters of a product by not only making the product unique and tasteful, but also making a user's operation comfortable, simple, and free. As general televisions do not have a touch function, so currently the commonly used method for interacting with a television is using a mouse or a keyboard. The above mentioned methods, however, cannot meet the requirements of a user on easy operation to a television through a handhold device well, for instance, cannot support the user in playing a game requiring sliding operations in a large area when an accurate operation such as choosing a move or a song is conducted, thus bringing many inconveniences to the user's television operation with a handheld device. Therefore, there is much room for the prior art to be improved and developed.

US 2010/064228 A1 describes an expandable system architecture that enables a self-configuring handheld device to dynamically generate and transmit optimized user environments to e.g. TVs. The handheld device detects the configuration of the TV, auto-generates a second user environment tailored to the TV's form factor, and transmits it for display. This second environment can include a different graphical user interface (GUI), applications, and input/output controls optimized for the larger display and peripherals (e.g., keyboards, trackpads). The handheld device performs all computation for the secondary environment.

EP 2 574 044 A1 describes a system where a mobile telephone terminal interacts with a television via an HDMI connection to transmit video and audio content. It focuses on event handling through CEC commands (Consumer Electronics Control), enabling seamless communication between devices for tasks like input source switching, power management, and content display control. Additionally, the system supports interactive UI interfaces, allowing the mobile device to manage and transmit video signals tailored to the television's resolution and display capabilities, enhancing interactivity and user experience.

Considering the above drawbacks in the prior art, an object of the present invention is to provide a UI interaction system and method for a handheld device and a TV set to solve the inconvenience problem in operating a television through a handheld device in the prior art.

The invention is set out in the appended set of claims.

Beneficial effects: a UI interaction system and method for a handheld device and a TV set of the present invention has the advantage of exceedingly simple operation. It can meet, only by operating the touch screen of the handheld device, the requirements for an accurate operation such as choosing a movie or a song, as well as the requirements for sliding on a large area when a user plays a game. This method allows full play to the display advantage of a television with high resolution, and also takes the advantage of simple operation of a handheld device, thereby providing excellent mobile internet experiences to users. In addition to that, the present invention uses a handheld device with a touch screen to operate a television without requiring the assistance of other hardware units, such as a mouse or a keyboard, and all operations can be done with the handheld device only, thus reducing the costs of devices.

The aforementioned characteristics, features and advantages of the invention as well as the way they are achieved will be further illustrated in connection with the following examples and considerations as discussed in view of the figures.
- Figure 1: is a schematic diagram showing the structure of a UI system for interaction between a handheld device and a TV set of the present invention;
- Figure 2: is a flow chart of a UI method for interaction between a handheld device and a TV set of the present invention;
- Figure 3: is a flow chart showing the processing of a press event of a UI method for interaction between a handheld device and a TV set according to the present invention;
- Figure 4: is a flow chart showing the processing of a move event of a UI method for interaction between a handheld device and a TV set according to the present invention.

The present invention provides a UI interaction system and method for a handheld device and a TV set, which will be described in details as below in order to make the purposes, technical solutions and effects of the present invention more explicit and clearer. It should be understood that the exemplary embodiments described here are used for explaining the present invention only with no intention to limit the scope of the present invention.

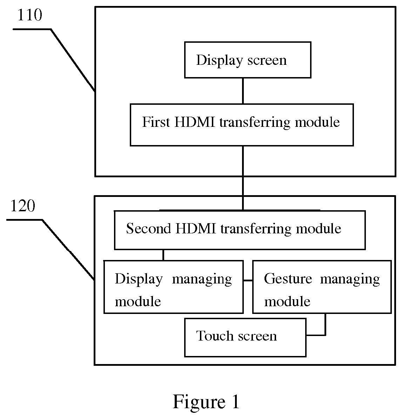

Referring to Figure 1, which is a schematic diagram showing the structure of a UI interaction system for a handheld device and a TV set of the present invention. UI interaction design, that is, user interface interaction, is a design popular in recent years used for the interaction between people and machines, which can represent the orientation and characters of software fully by not only making a product unique and tasteful, but also making a user's operation comfortable, simple, and free.

A UI interaction system for a handheld device and a TV set of the present invention is achieved through the communicating connection between HDMI transferring modules arranged for a television 110 and a handheld device 120. HDMI (High Definition Multimedia Interface) refers to a high definition multimedia interface, which is a digital video or audio interface technology capable of transferring audio signals and video signals simultaneously. As shown in Figure 1, the television 110 mainly comprises a first HDMI transferring module and a display screen, while the handheld device 120 comprises a touch screen, a gesture managing module, a display managing module and a second HDMI transferring module connected in sequence.

To be specific, in a preferred embodiment of the present invention, the television 110 is arranged with the first HDMI transferring module, the handheld device 120 is equipped with the second HDMI transferring module, and a hardware interface used for HDMI transmission is set on the handheld device 120, thus the second HDMI transferring module of the handheld device 120 can be coupled to the first HDMI transferring module of the television 110 through a HDMI data cable in a communicating connection manner by a user. Under HDMI Protocol, the handheld device 120 can obtain EDID data (Extended Display Identification Data) in the television 110. EDID is a data format defined by a standard published by VESA (Video Electronics Standards Association), which comprises parameters relating to performance of a TV including the information such as the resolution of a television display screen, suppliers, maximum image size, color setting, and/or presetting of manufacturer.

The handheld device 120 can adjust its touch screen resolution so as to make it matches the display screen resolution of the television 110 according to the obtained EDID data. In a preferred embodiment of the present invention, the handheld device 120 obtains the EDID data of the television 110 in order to adjust the touch screen resolution of the handheld device 120 first so as to improve experience effect of handheld device 120. A display managing module of the handheld device 120 initializes UI display data (user interface display data) according to the obtained EDID data such as the display screen resolution of the television 110, and transfers the UI display data to the television 110 through the second HDMI transferring module and the first HDMI transferring module, and thereafter the television 110 displays the updated frames synchronously according to the UI display data. Not simple projection of a touch screen resolution of the handheld device 120 onto the television 110 for display is performed. The process mentioned above can ensure that the UI display data transferred from the handheld device 120 to the television 110 is the standard HDMI output thus to give full play to the display advantage of high resolution of the television 110, thereby providing the best mobile internet experiences to users. An important character of the present invention is that the handheld device 120 can adapt to televisions 110 with various parameters through the HDMI connection between the handheld device 120 and the television 110. For instance, the users' televisions may be completely different in sizes and display screen resolutions; however, they can be assured of outputting high definition TVs by the UI display data transferred to them via the display managing module and the second HDMI transferring module of the handheld device 120.

As shown in Figure 1, the handheld device 120 is further provided with a gesture managing module and a touch screen. The gesture managing module can provides a switching function between a cursor mode and a touch mode, and accordingly an operation mode switch area is arranged on the touch screen of the handheld device 120 for the user to switch an operation mode. At this time, in the aspect of hardware, it also needs to coordinate the point-to-point relationship between the touch screen of the handheld device 120 and the display screen of the television 110. Through performing a touch at a location of the touch screen, the display screen displays the touch at a corresponding location.

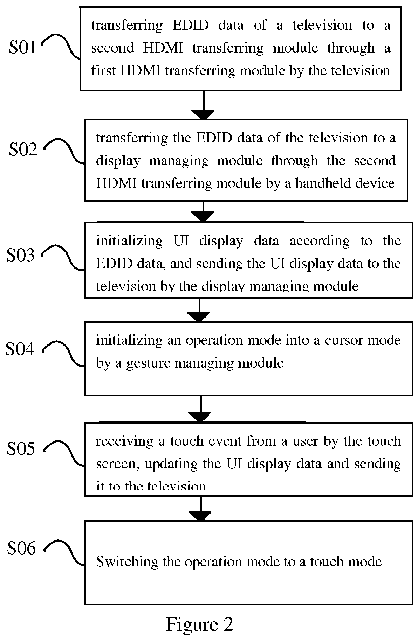

Referring to Figure 2, which is a flow chart of a UI interaction method for a handheld device and a TV set of the present invention, as shown in the Figure, the UI interaction method of the present invention mainly comprises the steps of:
S01. transferring EDID data of a television 110 to a second HDMI transferring module through a first HDMI transferring module by the television 110, during the course of which, the EDID data of the television is first read by the CPU of the television 110, then the EDID data of the television 110 is read by the first HDMI transferring module, and thereafter transferred to the second HDMI transferring module for processing;
S02. transferring the EDID data of the television 110 to a display managing module through the second HDMI transferring module by a handheld device 120, the display managing module initializes UI display data after receiving the EDID data of the television 110;
S03. initializing UI display data, and outputting the UI display data to the television 110 by the display managing module, that is the display managing module can initialize the UI display data according to the information included in the EDID data such as the screen resolution of the television 110, then transfer the UI display data to the first HDMI transferring module through the second HDMI transferring module, and at last have it displayed on the television 110 synchronously;
S04. initializing an operation mode by a gesture managing module, the default operation mode can be set as a cursor mode, under which a user can locate the touch point of each minimum unit on the television accurately, to be specific, a small icon will be shown on the television screen to prompt the user for the current cursor location;
S05. receiving a touch event from the user by the touch screen, updating the UI display data and sending the updated UI display data to the television 110 for responding, while sliding on the touch screen of the handheld device 120 by the user will move the position of the cursor but will not send the touch event to the current upper application such as video selection application for responding, after the user moves the cursor to a desired position, he or she can tap any area on the touch screen, and now the touch event will be send to the upper application. During the course, there will be a small icon shown on the television screen, the process of operating the television is similar to that of operating a computer, and the coordinates of the touch event sent by the user are the coordinates of the cursor displayed on the television screen rather than the coordinates of the position on the touch screen tapped by the user. In addition, it is worth mentioning that in the present invention, the application program used by the user to perform control through the handheld device 120 is a built-in application program of the handheld device 120 rather than an application program relevant or irrelevant to the television. The purpose of the present invention is to control the television 110 through the operations performed on the handheld device 120 and conduct displaying on the television 110 so as to give full play to the display advantage of high resolution of the television 110 as well as take the advantage of simple operation of the handheld device 120.

When the user needs to perform other operations, for instance needs to use the continuous-touch function or the sensor function, he or she can touch an operation mode switch area provided by the gesture managing module. The operation mode switch area can be arranged at the top left of the touch screen, and the operation mode can be switched to the touch mode only by one tap conducted within the operation mode switch area and switched back to the cursor mode when the user performs one tap again in the operation mode switch area.

Specifically, as shown in Figure 2, the gesture managing module initializes the operation mode as a cursor mode in the step S04; and after the step S05, the method further comprises:
S06. switching the operation mode to the touch mode, touching the touch screen and sending the touch event performed by the user. When the user needs to switch the operation mode to a touch mode, for instance when the user needs to perform sliding operations on a large area, he or she can switch the operation mode to the touch mode by tapping the operation mode switch area preset on the touch screen, that is the touch event in the step S05 is a press event with the coordinates in the operation mode switch area, and now the operation mode is switched to the touch mode. Any touch operation such as tapping or sliding on the touch screen will be sent to the upper application such as a game application for responding. During the process, the television can respond to the movements according to the touch gesture, such as a single-point sliding or multipoint scaling, and the coordinates of the touch event sent by the user are the coordinates of a position tapped or slide on the touch screen by the user.

Continuing further, after a user sends a touch event by touching the touch screen, the handheld device 120 will judge the type of the touch event which includes a move event and a press event, and respond according to the type of the touch event correspondingly.

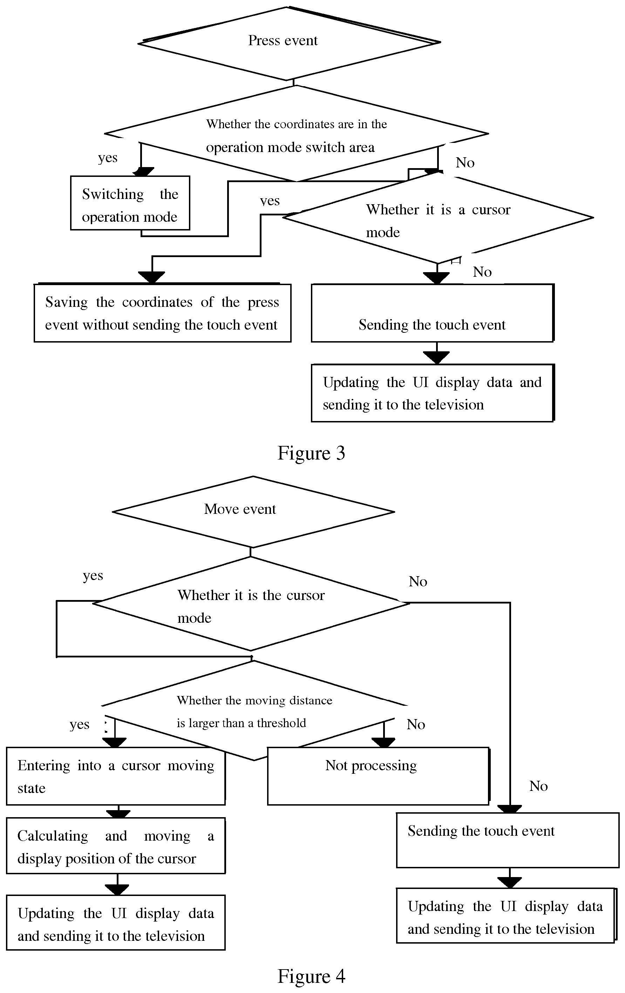

Referring to Figure 3, which is a flow chart showing the processing of a press event of a UI interaction method for a handheld device and a TV set of the present invention, when the type of the touch event is a press event, as shown in the Figure, the step S05 comprises:
LO1. determining whether the coordinates are in the operation mode switch area, if yes, switching the operation mode and proceeding to the next step, and if not, proceeding to the next step directly, in other words, after a press operation on the touch screen of the handheld device 120 is performed by the user, the handheld device 120 judges whether the coordinates of the press operation are in the operation mode switch area, if the coordinates are in the operation mode switch area, then switching the operation mode, and if not, proceeding to the next step;
L02. judging whether the operation mode is a cursor mode, if yes, saving the coordinates of the press event without sending the touch event, and if not, sending the touch event, updating the UI display data and sending it to the television 110. In the process, no matter what the current operation mode of the handheld device 120 is, the handheld device 120 will first judge whether it is a cursor mode, if yes, saving the coordinates of the press event without sending the touch event, and if not, sending the touch event, updating the UI display data and sending it to the television 110.

Referring to Figure 4, which is a flow chart showing the processing of a move event of a UI interaction method for a handheld device and a TV set of the present invention, and when the touch event is a move event, as shown in the Figure, the step S05 comprises:
T01. judging whether it is a cursor mode, if not, sending the touch event, updating and sending the UI display data to the television 110, and if yes, proceeding to the next step, that is when the user is moving on the touch screen, the handheld device judges first whether the current operation mode is a cursor mode, if it is not a cursor mode, that is the current operation mode is a touch mode, then sending the touch event, updating and sending the UI display data to the television, and if it is a cursor mode, then proceeding to the next step;
T02. judging whether a moving distance is bigger than the threshold, if not, not processing the move event, and if yes, then entering a cursor moving state, calculating and moving the display position of the cursor, updating and sending the UI display data to the television 110, that is in the cursor mode, the handheld device judges whether the moving distance is bigger than the threshold first after the user performs a move operation, if not, then no processing is conducted, and if the moving distance is bigger than the threshold, then entering into a cursor moving state, calculating and moving the display position of the cursor, thereafter, updating the UI display data and sending it to the television.

A UI interaction method and system for a handheld device and a TV set of the present invention uses a handheld device with a touch screen to operate a television without requiring assistance of other hardware units, such as a mouse or a keyboard, all operations can be done with the handheld device only, thus to reduce the costs of the devices. In addition to that, the present invention has the advantage of exceedingly simple operation, it can achieve data transmission and operation between a handheld device and a TV set by using the existed HDMI interfaces, and it can meet, only by operating the touch screen of the handheld device, the requirements for the accurate operation of such as choosing a movie or a song, as well as the requirements for sliding on a large area when a user plays a game. This method can allow full play to the display advantage of a television with high resolution, and also can take the advantage of simple operation of a handheld device, thus providing excellent mobile internet experiences to users.

It should be understood that the application of the present invention is not limited to above described embodiments, those who skilled in the field may make improvements or variations according to the above description, and all the improvements and variations should fall into the protection scope of claims attached to the present invention.

## Claims

1. A user interface, UI, interaction system comprising:
a television (110) comprising a display screen and a first High Definition Multimedia Interface, HDMI, transferring module connected with the display screen; and
a handheld device (120) comprising a second HDMI transferring module, a display managing module, a gesture managing module, and a touch screen connected in sequence;
the second HDMI transferring module and the first HDMI transferring module being adapted to be in a communicating connection with each other;
wherein the television (110) is adapted to transfer Extended Display Identification Data, EDID, data of the television (110) to the second HDMI transferring module through the first HDMI transferring module;
wherein the handheld device (120) is adapted to transfer the EDID data of the television (110) received by the second HDMI transferring module to the display managing module of the handheld device (120);
wherein the display managing module is adapted to adjust a touch screen resolution of the touch screen to match a display screen resolution of the display screen according to the EDID data;
wherein the display managing module is adapted to initialize UI display data according to the EDID data and output the UI display data to the television;
wherein the handheld device adapts to a plurality of types of televisions including high definition televisions;
**characterized in that** the gesture managing module is adapted to initialize an operation mode to a cursor mode;
wherein the handheld device is adapted to receive a touch event from a user, update the UI display data and send the UI display data to the television to interact with a game display on the television;
wherein the operation mode comprises a cursor mode, that includes the touch event and a move event and that enables movement of a cursor on the television via the handheld device, and a touch mode that enables sending the touch event to the television from the handheld device;
wherein when the touch event is a press event receiving the touch event from the user comprises:
determining whether to switch the operation mode according to whether coordinates of a press event are in an operation mode switch area;
wherein the operation mode switch area is arranged at a top left of the touch screen of the handheld device;
deciding whether the operation mode is the cursor mode, and if so, saving the coordinates of the press event without sending the touch event, and if not, sending the touch event, updating the UI display data and sending the UI display data to the television;
wherein when the touch event is a move event, receiving a touch event from a user comprises:
determining whether the operation mode is the cursor mode, and if not, sending the touch event, updating the UI display data, and sending the UI display data to the television, and, if so,
determining whether a moving distance of the move event is larger than a threshold, and if not, not processing the move event, and if so, then entering a cursor moving state, calculating and moving a display position of the cursor, updating the UI display data and sending the UI display data to the television.

2. The UI interaction system according to claim 1, wherein when the touch event is the press event, and the coordinates of the press event are in the operation mode switch area, the operation mode is switched to the touch mode.

3. The UI interaction system according to claim 1, wherein the operation mode is switched back and forth from the touch mode to the cursor mode by a tap on a touch screen of the handheld device.

4. The UI interaction system according to claim 1, wherein the display managing module further displays the UI display data on the television synchronously with outputting UI display data.

## Patentansprüche

1. Benutzerschnittstellen (UI)-Interaktionssystem, umfassend:
ein Fernseher (110), umfassend einen Anzeigebildschirm und ein erstes High-Definition-Multimedia-Interface-, HDMI-Übertragungsmodul, das mit dem Anzeigebildschirm verbunden ist; und
ein Handgerät (120), das ein zweites HDMI-Übertragungsmodul, ein Anzeigeverwaltungsmodul, ein Gestenverwaltungsmodul und einen Berührungsbildschirm umfasst, die nacheinander angeschlossen sind;
wobei das zweite HDMI-Übertragungsmodul und das erste HDMI-Übertragungsmodul dafür ausgelegt sind, in kommunikativer Verbindung miteinander zu stehen;
wobei der Fernseher (110) dafür ausgelegt ist, einen Extended-Display-Identification-Data, EDID, Daten des Fernsehers (110) über das erste HDMI-Übertragungsmodul an das zweite HDMI-Übertragungsmodul zu übertragen;
wobei das Handgerät (120) dafür ausgelegt ist, die EDID-Daten des Fernsehers (110), die vom zweiten HDMI-Übertragungsmodul empfangen wurden, an das Anzeigeverwaltungsmodul des Handgeräts (120) zu übertragen;
wobei das Anzeigeverwaltungsmodul dafür ausgelegt ist, eine Berührungsbildschirm-Auflösung des Berührungsbildschirms gemäß den EDID-Daten an eine Anzeigebildschirm-Auflösung des Anzeigebildschirms anzupassen;
wobei das Anzeigeverwaltungsmodul dafür ausgelegt ist, UI-Anzeigedaten gemäß den EDID-Daten zu initialisieren und die UI-Anzeigedaten an den Fernseher auszugeben;
wobei sich das Handgerät an eine Vielzahl von Fernsehertypen einschließlich hochauflösender Fernseher anpasst;
**dadurch gekennzeichnet, dass** das Gestenverwaltungsmodul dafür ausgelegt ist, einen Betriebsmodus auf einen Cursormodus zu initialisieren;
wobei das Handgerät dafür ausgelegt ist, ein Berührungsereignis von einem Benutzer zu empfangen, die UI-Anzeigedaten zu aktualisieren und die UI-Anzeigedaten an den Fernseher zu senden, um mit einer Spielanzeige auf dem Fernseher zu interagieren;
wobei der Betriebsmodus einen Cursormodus, der das Berührungsereignis und ein Bewegungsereignis umfasst und die Bewegung eines Cursors auf dem Fernseher über das Handgerät ermöglicht, und einen Berührungsmodus, der das Senden des Berührungsereignisses an den Fernseher von dem Handgerät ermöglicht, umfasst;
wobei, wenn das Berührungsereignis ein Druckereignis ist,
Empfangen des Berührungsereignisses vom Benutzer Folgendes umfasst:
Bestimmen, ob der Betriebsmodus umgeschaltet werden soll, je nachdem, ob die Koordinaten eines Druckereignisses innerhalb eines Betriebsmodus-Umschaltbereichs liegen;
wobei der Betriebsmodus-Umschaltbereich oben links auf dem Berührungsbildschirm des Handgeräts angeordnet ist;
Entscheiden, ob der Betriebsmodus der Cursormodus ist; wenn ja, Speichern der Koordinaten eines Druckereignisses ohne Senden des Berührungsereignisses; wenn nicht, Senden des Berührungsereignisses, Aktualisieren der UI-Anzeigedaten und Senden der UI-Anzeigedaten an den Fernseher;
wobei, wenn das Berührungsereignis ein Bewegungsereignis ist, Empfangen eines Berührungsereignisses von einem Benutzer Folgendes umfasst:
Bestimmen, ob der Betriebsmodus der Cursormodus ist; wenn nicht, Senden des Berührungsereignisses, Aktualisieren der UI-Anzeigedaten und Senden der UI-Anzeigedaten an den Fernseher; wenn ja, Bestimmen, ob eine Bewegungsstrecke des Bewegungsereignisses größer als ein Schwellenwert ist, und wenn nicht, das Bewegungsereigniss nicht zu verarbeiten, und wenn ja, dann Eintreten in einen Cursorbewegungszustand, Berechnen und Bewegen einer Anzeigeposition des Cursors, Aktualisieren der UI-Anzeigedaten und Senden der UI-Anzeigedaten an den Fernseher.

2. UI-Interaktionssystem nach Anspruch 1, wobei, wenn das Berührungsereignis das Druckereignis ist und die Koordinaten des Druckereignisses im Betriebsmodus-Umschaltbereich liegen, der Betriebsmodus in den Berührungsmodus umgeschaltet wird.

3. UI-Interaktionssystem nach Anspruch 1, wobei der Betriebsmodus durch ein Antippen des Berührungsbildschirms des Handgeräts zwischen dem Berührungsmodus und dem Cursormodus hin- und hergeschaltet wird.

4. UI-Interaktionssystem nach Anspruch 1, wobei das Anzeigeverwaltungsmodul ferner die UI-Anzeigedaten auf dem Fernseher synchron mit der Ausgabe der UI-Anzeigedaten anzeigt.

## Revendications

1. Un système d'interaction UI (*User Interface,* interface utilisateur), comprenant :
un téléviseur (110) comprenant un écran d'affichage et un premier module de transfert HDMI (*High Definition Multimedia Interface,* interface multimédia haute définition), connecté à l'écran d'affichage ; et
un dispositif portatif (120) comprenant un deuxième module de transfert HDMI, un module de gestion d'affichage, un module de gestion de geste, et un écran tactile connectés en séquence ;
le deuxième module de transfert HDMI et le premier module de transfert HDMI étant conçus pour être dans une connexion de communication l'un avec l'autre ;
dans lequel le téléviseur (110) est conçu pour transférer des données EDID (*Extended Display Identification Data,* données d'identification de dispositif d'affichage étendu) du téléviseur (110) au deuxième module de transfert HDMI par l'intermédiaire du premier module de transfert HDMI ;
dans lequel le dispositif portatif (120) est conçu pour transférer les données EDID du téléviseur (110) reçues par le deuxième module de transfert HDMI au module de gestion d'affichage du dispositif portatif (120) ;
dans lequel le module de gestion d'affichage est conçu pour ajuster une résolution d'écran tactile de l'écran tactile pour correspondre à une résolution d'écran d'affichage de l'écran d'affichage selon les données EDID ;
dans lequel le module de gestion d'affichage est conçu pour initialiser des données d'affichage UI selon les données EDID et délivrer les données d'affichage UI au téléviseur ;
dans lequel le dispositif portatif s'adapte à une pluralité de types de téléviseurs y compris des téléviseurs haute définition ;
**caractérisé en ce que** le module de gestion de geste est conçu pour initialiser un mode de fonctionnement vers un mode curseur ;
dans lequel le dispositif portatif est conçu pour recevoir un événement tactile en provenance d'un utilisateur, mettre à jour les données d'affichage UI et envoyer les données d'affichage UI au téléviseur pour interagir avec un affichage de jeu sur le téléviseur ;
dans lequel le mode de fonctionnement comprend un mode curseur, qui inclut l'événement tactile et un événement de déplacement et qui permet le déplacement d'un curseur sur le téléviseur via le dispositif portatif, et un mode tactile qui permet l'envoi de l'événement tactile au téléviseur à partir du dispositif portatif ;
dans lequel lorsque l'événement tactile est un événement de pression, la réception de l'événement tactile en provenance de l'utilisateur comprend :
la détermination qu'il convient ou non de commuter le mode de fonctionnement selon que des coordonnées d'un événement de pression sont ou non dans une zone de commutation de mode de fonctionnement ;
dans lequel la zone de commutation de mode de fonctionnement est agencée en haut à gauche de l'écran tactile du dispositif portatif ;
la décision que le mode de fonctionnement est ou non le mode curseur, et s'il l'est, la sauvegarde des coordonnées de l'événement de pression sans envoyer l'événement tactile, et s'il ne l'est pas, l'envoi de l'événement tactile, la mise à jour des données d'affichage UI et l'envoi des données d'affichage UI au téléviseur ;
dans lequel lorsque l'événement tactile est un événement de déplacement, la réception d'un événement tactile en provenance d'un utilisateur comprend :
la détermination que le mode de fonctionnement est ou non le mode curseur, et s'il ne l'est pas, l'envoi de l'événement tactile, la mise à jour des données d'affichage UI, et l'envoi des données d'affichage UI au téléviseur, et, s'il l'est,
la détermination qu'une distance de déplacement de l'événement de déplacement est ou non supérieure à un seuil, et si elle ne l'est pas, le non-traitement de l'événement de déplacement, et si elle l'est, alors l'entrée dans un état de déplacement de curseur, le calcul et le déplacement d'une position d'affichage du curseur, la mise à jour des données d'affichage UI et l'envoi des données d'affichage UI au téléviseur.

2. Le système d'interaction UI selon la revendication 1, dans lequel lorsque l'événement tactile est l'événement de pression, et que les coordonnées de l'événement de pression sont dans la zone de commutation de mode de fonctionnement, le mode de fonctionnement est commuté vers le mode tactile.

3. Le système d'interaction UI selon la revendication 1, dans lequel la commutation du mode de fonctionnement du mode tactile vers le mode curseur et vice versa est opérée par une légère frappe sur un écran tactile du dispositif portatif.

4. Le système d'interaction UI selon la revendication 1, dans lequel le module de gestion d'affichage affiche en outre les données d'affichage UI sur le téléviseur de manière synchrone avec la délivrance de données d'affichage UI.
